# EUROPÄISCHE PATENTANMELDUNG

(11) **EP 1 284 172 A1**
(43) Veröffentlichungstag der Anmeldung: **19.02.2003**
(21) Anmeldenummer: 02012168.7
(22) Anmeldetag: 03.06.2002
(51) Int. Cl.: B23Q 1/28, F16B 2/24, F15B 15/26

(54) **Feststellvorrichtung für eine Linearbewegungseinheit**

(30) Priorität: 13.08.2001 EP 01119471
(71) Anmelder: P W B AG, 9450 Alstätten (CH)
(72) Erfinder: Nemeth, Ferenc, 9434 Au (CH)
(74) Vertreter: Révy von Belvárd, Peter

(57) **Zusammenfassung**

Eine Feststellvorrichtung für eine Linearbewegungseinheit, die relativ zu mindestens einer Stange (4) verfahrbar gelagert ist, weist zwei von der Stange (4) im Bereich von Klemmöffnungen (9a) durchsetzte Klemmglieder (9) auf, die je zwischen einer ersten und einer zweiten Stellung um eine Schwenkachse (15) schwenkbar sind. In der ersten Stellung stehen sie über die Innenfläche einer die Stange (4) aufnehmenden Klemmöffnung (9a) reibungsschlüssig mit der Stange (4) in Eingriff. In der zweiten Stellung sind die Klemmglieder (9) gegenüber der Stange (4), oder umgekehrt, lose verschieblich. Die Umschaltung von einer Stellung auf die andere erfolgt mit Hilfe eines Betätigungsantriebes (20, 21), der einen Antriebsteil (20) und einen von diesem gesonderten und gegenüber einer ihm zugekehrten Druckfläche (5) des Antriebsteiles (20) quer zur Umschaltbewegung bewegbaren, den Klemmgliedern (9) gegenüberliegenden keilartigen Betätigungsteil (21) aufweist. Dieser greift wenigstens in einer der Stellungen zwischen die Klemmglieder (9) ein. Der keilartige Betätigungsteil ist als mindestens ein Rotationskörper (21) ausgebildet, der an der Druckfläche (5) des Antriebsteiles (20) abrollbar ist. Alternativ oder zusätzlich weist die Innenfläche (9a') der Klemmöffnung (9a) mindestens eines Klemmgliedes (9) einen im wesentlichen konvexen Querschnitt auf.

## Beschreibung

Die Erfindung bezieht sich auf eine Feststellvorrichtung nach dem Oberbegriff des Anspruches 1.

Feststellvorrichtungen sind schon in verschiedenster Art vorgeschlagen worden. Beispielsweise zeigt die DE-A-32 45 074 eine Ausführung, bei der sich die hebelartigen Klemmglieder parallel zu der zu fixierenden Stange erstrecken und mittels einer Kurvenscheibe als Teil des Betätigungsantriebes aus einer Klemmstellung in eine Freigabestellung bringbar sind. Die Anordnung der Klemmglieder parallel zur zu fixierenden Stange (oder Welle) führt allerdings zu einem grossen Platzaufwand.

Die US-A-2,806,723 (Fig. 7) offenbart eine kompaktere Ausführung, bei der ein (nicht dargestellter) Kolben auf einen keilartigen Betätigungsteil drückt, der die beiden Klemmglieder zum Umschalten auseinanderdrückt. Dieses Prinzip findet sich in umgekehrter Form, nämlich mit zwei die Klemmglieder zusammenpressenden Keilflächen, in der US-A-6,044,934. Diese Schrift lehrt auch, dass die hebelartigen Klemmglieder bei ihrer Schwenkbewegung aus einer Stellung in die andere vorteilhaft durch im Bereich ihrer Schwenkachse gelegene ballige Führungsflächen geführt werden.

Diese Lehre wurde auch in der WO 99/38645 aufgegriffen, bei der die so geführten Klemmglieder eine deutliche Schwenkbewegung auszuführen vermögen. In dieser Schrift wird übrigens wieder auf einen solchen Keil zurückgegriffen, wie ihn die oben erwähnte US-A-2,806,723 vorgeschlagen hat. Dieser Keil ist aber gegenüber der Druckfläche eines pneumatischen Kolbens auf einer Parallelfläche schwimmend gelagert, um eine deutlichere Kippbewegung und damit eine bessere und sicherere Klemmung zuzulassen.

Zwar konnte mit all diesen Massnahmen eine weitgehend kompakte Ausführung erzielt werden, die Anforderungen an eine weitere Verringerung des Platzbedarfes, an eine grössere Verlässlichkeit, längere Betriebsdauer u.dgl. werden jedoch immer höher. Dies stellt auch die Aufgabe dar, welche der vorliegenden Erfindung zugrunde liegt, und die erfindungsgemäss durch die kennzeichnenden Merkmale des Anspruches 1 in überraschend einfacher und überaus vorteilhafter Weise gelöst wird.

An Stelle der bisher üblichen keilartigen Betätigungsteil, welche entlang der mit ihnen im Eingriff stehenden Flächen der hebelartigen Klemmglieder reiben, wird nun ein Rotationskörper (mindestens eine Kugel oder Rolle) verwendet, der an der Druckfläche des Antriebsteiles abrollbar ist, so dass mindestens ein Teil der bisher nachteiligen Reibung zwischen Betätigungsteil und Klemmgliedern vermieden ist. Es ergeben sich damit aber auch noch eine ganze Reihe von Vorteilen, wie:
- da der Rotationskörper keinerlei Parallelfläche benötigt, von der er vorragt, ergibt sich eine noch kompaktere Bauweise;
- die bisher die Kippbewegung der Klemmglieder beengende Parallelfläche bzw. der sie aufweisende Teil entfällt, so dass ein Teil eingespart wird,
- es besteht auch eine grössere Freiheit für das Kippen der Klemmglieder und mehr Bewegungsfreiheit, so dass sich der Kipphub (Sicherheit des Fixierungseingriffes) vergrössert, zumal ja das Zentrum der Vorrichtung undefiniert ist;
- der Abrieb ist durch die rollende Reibung geringer als bei der bisherigen Gleitreibung, was die Verlässlichkeit und Standzeit erhöht;
- der Zusammenbau vereinfacht sich, weil der Rotationskörper sich an den Kippgliedern selbst in seiner Lage ausrichtet;
- Da der Rotationskörper mit der Druckfläche des Betätigungsteils nur punktuelle (bei einer Kugel) bzw. Linienberührung bei einer Rolle (die bevorzugt ist) besitzt, ergeben sich keine die Druckfläche kippende Kräfte, d.h. dass im Falle eines Kolbens mit der Druckfläche, dieser gerade in seinem Zylinder verfahrbar ist, ohne Gefahr eines Verkantens;
- das aber wiederum bedeutet, dass auch der Kolben kürzer sein kann (er braucht weniger Fläche, um im Zylinder geradegeführt zu sein), was die Kompaktheit der Vorrichtung noch begünstigt.

Im Falle einer Rolle als Rotationskörper könnte diese über ihre Länge unterschiedliche Durchmesser besitzen, beispielsweise in der Mitte enger (oder weiter) als am Ende wogegen die Klemmglieder vorzugsweise dieser Durchmesserveränderung entsprechend, beispielsweise bauchig, ausgebildet sind), doch ist eine zylindrische Rolle bevorzugt.

Die Erleichterung der nun sehr weiten Kippbewegung der Klemmglieder wird natürlich noch besonders begünstigt, wenn jene Massnahmen getroffen werden, die in der bereits genannten US-A-6,044,934 (parallele EP-B-0 824 994) empfohlen werden, und die als an sich bekannte Merkmale im Anspruch 3 genannt sind.

Der Gegenstand des Anspruches 4 besitzt eigene erfinderische Bedeutung, da er es ermöglicht, eine relativ grosse Fläche des Klemmgliedes für den Eingriff mit der Stange (oder Welle) vorzusehen. Wenn dabei von "im wesentlichen konvex" die Rede ist, so braucht es sich nicht um eine im Querschnitt bogenförmige Fläche handeln, vielmehr kann sie auch prismatisch bzw. eckig sein. Der Gegenstand des Anspruches 4 ist aber von besonderer Bedeutung im Zusammenhang mit dem Gegenstand des Anspruches 3.

Da ein Rotationskörper schon an sich eine - im weiteren Sinne - keilförmige Gestalt hat, d.h. dass seine Breite bis zur Mitte zunimmt, könnten die Klemmglieder an sich völlig gerade und in der Richtung der Umschaltbewegung des Betätigungsantriebes ausgebildet sein. Es ist jedoch eine Ausbildung nach Anspruch 5 bevorzugt. Dabei ergibt sich der zusätzliche Vorteil, dass eine Rückholeinrichtung, wie sie bisher in vielerlei Gestalt vorgesehen war, nämlich in Form von zwischen den Klemmgliedern eingespannten Federn und/oder in Form einer die Betätigungseinrichtung von den Klemmgliedern abhebenden Feder, nicht mehr erforderlich ist. Auch dies dient der Vereinfachung und einer kostengünstigeren Herstellung.

Wenn die Merkmale des Anspruches 6 erfüllt sind, dann ergibt sich eine Art von Käfiglagerung für den Rotationskörper.

Auch der Antrieb kann verschieden erfolgen, beispielsweise durch einen Elektromagneten. Bevorzugt ist jedoch die an sich bekannte Lösung nach Anspruch 7.

Weitere Einzelheiten der Erfindung ergeben sich an Hand der nachfolgenden Beschreibung eines in der Zeichnung schematisch dargestellten Ausführungsbeispieles. Es zeigen:
- Fig. 1: einen Längsschnitt nach der Linie I-I der Fig. 2 durch die erfindungsgemässe Feststellvorrichtung in deren gelöster Stellung;
- Fig. 2: eine Draufsicht im Sinne der Linie II-II der Fig. 1 auf die Stirnseiten der Klemmglieder und die den erfindungsgemässen Rotationskörper bildende Rolle; und die
- Fig. 3 und 4: jeweils die Vorrichtung in einer Sperrstellung, das eine Mal bei Verschiebung der Stange oder Welle nach links, das andere Mal nach rechts.

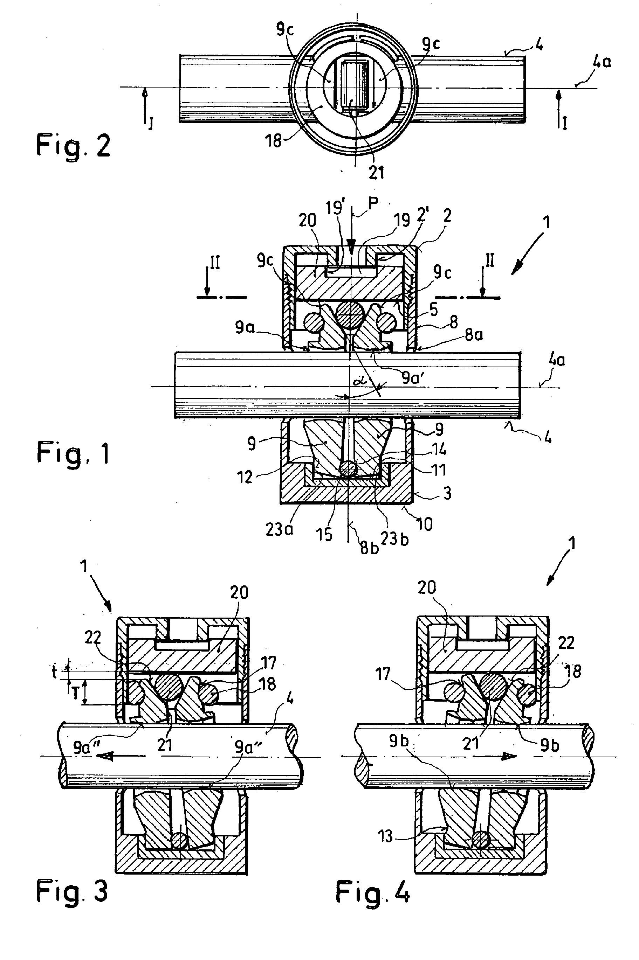

Fig. 1 zeigt eine Feststellvorrichtung 3 einer Linearbewegungseinheit 1, die entlang einer Stange 4 bzw. einer Stangenachse 4a, oder vice-versa, bewegbar ist. Hier kommt es ja nur auf die Relativbewegung an, und auch die Länge der Stange spielt für die Erfindung keine Rolle. Die Stange 4 erstreckt sich durch mindestens ein, hier nicht dargestelltes, Gleitlager, dessen Einzelheiten beispielsweise der schon erwähnten UA-A-6,044,934 zu entnehmen sind. Der Ausdruck "Linearbewegungseinheit" soll jedoch im allgemeinsten Sinne verstanden werden, denn es ist auch bereits vorgeschlagen worden, eine solche Feststellvorrichtung 3 an der Innenseite eines drehenden Rades anzuordnen, so dass dabei die Längsachse der "Linearbewegungseinheit" praktisch einen Kreisbogen bildet.

Die Feststellvorrichtung 3 umfasst eine, beispielsweise zylindrische, durch ein eingeschraubtes Kolben-Aufnahmegehäuse 2 abgeschlossenes Zylinder- oder Klemmgehäuse 8 mit einer Aufnahmeachse 8b in der zwei, vorzugsweise zumindest teilweise teilzylinderförmige (vgl. Fig. 2), Klemmglieder 9 schwenkbar gelagert sind. Das Zylindergehäuse 8 bzw. die Klemmglieder 9 weisen Durchgangsöffnungen 8a bzw. Klemmöffnungen 9a zum Durchführen der Stange 4 auf.

Dabei sind die Klemmöffnungen 9a so an den Querschnitt der Stange 4 angepasst, dass sie in den in den Fig. 3 und 4 gezeigten Stellungen jedes Klemmgliedes 9 klemmend an der Stange 4 sitzen und in einer zweiten, in Fig. 1 dargestellten Stellung die Stange 4 frei beweglich aufnehmen. Dazu ist es vorteilhaft, wenn die Innenfläche 9a' der Klemmöffnungen 9a eine etwa konvexe, vorzugsweise aber in der dargestellten Weise mehreckige Form besitzen, so dass sich in der Klemmstellung nach Fig. 3 die obere linke Teilfläche 9a" des linken Klemmgliedes 9 und die untere rechte Teilfläche des rechten Klemmgliedes 9 flächig (statt wie bisher nur linienförmig) an die Stange 4 legen, wogegen in der Stellung der Fig. 4 umgekehrt die Teilflächen 9b an der Stange 4 anliegen und diese reibungsschlüssig fixieren.

Die Schwenkbewegung zwischen den beiden Stellungen wird, wie bei der Ausbildung nach der US-A-6,044,934, durch die Lagerung der beiden Klemmglieder 9 im Zylindergehäuse 8 und von der durch die Klemmöffnungen 9a verlaufenden Stange 4 geführt, wobei die Stellung nach Fig. 3 bei Bewegung der Stange 4 nach links, die Stellung nach Fig. 4 bei Bewegung der Stange 4 nach rechts zustandekommt. Das Zylindergehäuse 8 hat vorzugsweise am einen Ende einen Fussbereich 10 mit einer Führungsausnehmung 11, die vorzugsweise als zylindrische Bohrung entlang der Aufnahmeachse 8b ausgebildet ist und, im besonderen, zumindest teilweise als zweite Führungsfläche 12 dient. Die Klemmglieder 9 sind mit einem Führungsende in die Führungsausnehmung 11 eingeführt und haben dort je eine teilkugelförmige, insbesondere erste Führungsfläche 13 (vgl. Fig. 4). Die Führungsausnehmung 11 könnte auch mit einem im wesentlichen rechteckigen Querschnitt ausgeführt sein und entsprechend wären die ersten Führungsflächen teilzylinderförmig mit Zylinderachsen fluchtend mit der hier durch einen Stift 15 gebildeten Schwenkachse. Denn im Bereich der Führungsenden sind an den Klemmgliedem 9 einander zugewandte, z.B. dritte, Führungsflächen 14 ausgebildet. Um die Klemmglieder 9 in ihrer Längsrichtung unversetzt nebeneinander anzuordnen, ist der erwähnte, fluchtend zu den geometrischen Schwenkachsen verlaufende Stift 15 im Bereich der dritten Führungsflächen 14 an diese anliegend angeordnet. Die Führungsenden und der Stift 15 sind so dimensioniert, dass sie im wesentlichen spielfrei in die Führungsausnehmung 11 passen. Gegebenenfalls wird aber nur ein Paar von Führungsflächen 12, 13 bzw. 14, 15 verwendet. Zusätzlich ist es vorteilhaft, wenn die Klemmglieder 9 auch gegen ihre Schwenkachse 15 zu, in der Unterseite (bezogen auf die Zeichnung) mit einer am Boden des Abschlussteiles abrollenden Abrollflächen 23a, 23b versehen sind.

Diese an sich bekannte Anordnung ist bei der nachstehend besprochenen Erfindung von besonderer Bedeutung, weil sich erfindungsgemäss eine viel grössere Kippbewegung ergeben kann, als dies bisher möglich war, und deshalb die eben besprochene Schwenkführung von besonderer Bedeutung ist.

Um die Klemmglieder 9 für eine erste Stellung bzw. Klemmstellung (Fig. 3, 4) zusammenzupressen, ist mindestens eine Pressvorrichtung vorgesehen, die in den beiden Klemmgliedern einander zugeordnete Ausnehmungen 17 nahe der Stirnenden 9c und ein darin eingesetztes Federelement hier in Form eines elastischen Ringes oder Bandes 18. Indem das Federelement 18 weiter von der Schwenkachse bzw. vom Stift 15 entfernt angeordnet sind als die Klemmöffnungen 9a, kann eine grosse Klemmkraft erzielt werden. Die Schwenkbewegung nach aussen ist durch die Hülse 8 begrenzt, wie besonders die Fig. 3 und 4 veranschaulichen.

Am (in den Figuren oben) offenen Ende des Zylindergehäuses 8 schliesst ein im Aufnahmegehäuse 2 untergebrachter, als Zylinderraum 19 für die Betätigung und Umschaltung der Klemmglieder aus der in den Fig. 3 und 4 dargestellten Klemmstellung in die aus Fig. 1 ersichtliche Freigabestellung dienender, Antriebsteil mit einem Kolben 20 das Innere des Zylinder- oder Klemmgehäuses 8 ab. An Stelle eines Kolbens 20 könnte auch der Anker eines Elektromagneten oder jede andere bekannte Betätigungseinrichtung vorgesehen sein, obwohl eine fluidische Betätigung, insbesondere eine pneumatische, bevorzugt ist.

Es ist ersichtlich, dass die Zylinderwandung 19' des als Bohrung im Kolben 20 ausgebildeten Zylinderraumes 19 mit einer rohrförmigen Gehäusewandung 2' zur radial inneren Führung des Kolbens 20 zusammenwirkt, wogegen dessen radial äussere, an der Wand des Gehäuses 2 dichtend anliegende Begrenzungswand eine äussere Führungsfläche bildet. Durch diese doppelte Führung kann der Kolben in Axialrichtung relativ kurz ausgeführt sein, ohne dass die Gefahr eines Verkippens oder Verkantens innerhalb des Gehäuses 2 besteht. Es versteht sich jedoch, dass die Führung auch anders ausgebildet sein kann, beispielsweise indem die innere Führung von mindestens einer exzentrisch und parallel zur Achse 8b sich erstreckenden Führungssäule an der Deckelfläche des Aufnahmegehäuses 2 gebildet ist. Auch könnte eine Führung durch einen in eine Axialnut an der radialen Aussenseite des Kolbens 20 eingreifende Längsvorsprung des Aufnahmegehäuses 2 gebildet sein, doch ist es in jedem Falle bevorzugt, wenn eine der Führungsflächen radial weiter innen und eine weitere (normalerweise die Umfangsfläche des Kolbens 20) radial aussen liegt. Die doppelte Führung ist natürlich besonders im Zusammenhang mit der Erfindung von Vorteil, da diese eine grössere Schwenkbewegung der Klemmglieder ermöglicht; doch da die Anordnung zweier so angeordneter Führungen zu einem axial kürzeren Kolben und damit zu einer kompakteren Konstruktion unabhängig davon führt, ob die Feststelleinrichtung im Sinne der Erfindung oder nach dem Stande der Technik ausgebildet ist, hat die doppelte Führung bereits für sich Erfindungscharakter.

Die Verbindung zwischen dem Zylindergehäuse 8 und dem deckelartigen Aufnahmegehäuse 2 für den Zylinderraum 19 ist, wie erwähnt, als Schraubverbindung, gegebenenfalls aber als einrastende Steckverbindung, ausgebildet. Der Kolben 20 besitzt vorzugsweise eine nach unten gerichtete und sich quer zu seiner Bewegungsrichtung erstreckende Druckfläche 5, die bevorzugt eben ausgebildet ist, gewünschtenfalls aber auch als konvexe oder konkave Abrollfläche für einen Rotationskörper 21 dienen kann. Dieser Rotationskörper 21 könnte von einer Reihe von entlang einer Linie angeordneter Kugeln, ja selbst von einer einzigen Kugel, gebildet sein, ist aber vorzugsweise eine Rolle 21, wie man besonders in der Draufsicht der Fig. 2 erkennen kann. Bevorzugt ist der Rotationskörper - im Gegensatz zum Stand der Technik, bei dem der Betätigungsteil als keilförmiger Kunststoffteil ausgebildet und deshalb einem Abrieb sowie im Falle höherer Betriebstemperaturen allenfalls einer Verformung unterworfen war, die die Zuverlässigkeit der Funktion in Frage stellen konnte - aus Metall ausgebildet, insbesondere aus Stahl. Damit wird auch die Standzeit und die Zuverlässigkeit erhöht.

Da ein Rotationskörper, wie die Rolle 21, einen bis zu seiner Mitte sich vergrössernden Querschnitt besitzt und daher als "keilförmig" im weitesten Sinne angesprochen werden kann, dient die Rolle 21 zum Auseinanderspreizen der beiden hebelartigen Klemmglieder 9 entgegen der Kraft des elastischen Ringes 18, wenn in das Aufnahmegehäuse 2 und damit in den Zylinderraum 19 Druckluft oder ein anderes Druckmedium im Sinne des Pfeiles P eingelassen wird. Geschieht dies, so hebt sich die vorher jeweils im Kontakt mit der Stange stehende Teilfläche 9a" bzw. 9b (vgl. Fig. 3, 4) von der Oberfläche der Stange 4 ab, und es ergibt sich die Stellung nach Fig. 1, in der die Fixierung der Vorrichtung 1 relativ zur Stange 4 gelöst ist. Durch Aufbringen von Druck auf den Kolben 20 wird also die reibungsschlüssige Verriegelung der Klemmglieder 9 gelöst. Zwar ist die Erfindung nicht auf diese Betriebsart beschränkt, doch hat sie den Vorteil einer leicht vorherbestimmbaren Klemmkraft.

Vergleicht man die Stellung des Kolbens in einer der Fig. 3 und 4 gegenüber derjenigen nach Fig. 1, so ist ersichtlich, dass eine minimale Bewegung des Kolbens 20 gegenüber dem den Zylinderraum 19 im Aufnahmegehäuse 2 genügt, um die entsprechende Umschaltung vorzunehmen. Dabei rollt der Rotationskörper 21 an der nach unten gerichteten Druckfläche 5 des Kolbens 20 ab. Eine besondere Rückstelleinrichtung für den Kolben 20 oder die Klemmglieder 9 ist nicht erforderlich. Dies zeigt, dass alleine die Betätigung nur einen sehr geringen Bewegungshub benötigt, so dass die Länge des Zylinderraumes 19, aber auch die Erstreckung des Kolbens in Richtung der Achse 8b gering gehalten werden kann und so eine grössere Kompaktheit der Konstruktion erzielt wird. Dies kann noch zusätzlich dadurch gesichert werden, dass die Anordnung des Kolbens 20 relativ zu den Stirnenden 9c derart dimensioniert und gewählt ist, dass diese Stirnenden 9c als Endanschlag für den Kolben 20 wirken, wenn dieser unter Druck gesetzt und (bezogen auf die Zeichnung) abwärts bewegt wird. Damit ist praktisch jede der Stellungen des Kolbens 20, aber auch der Klemmglieder 9, genau definiert und eine minimale Bewegung des Kolbens 20 gesichert, was zu einer noch kompakteren Konstruktion führt. Freilich wäre es denkbar, einen solchen Endanschlag in anderer Form zu verwirklichen, doch bietet sich die beschriebene Lösung als besonders einfach und vorteilhaft an.

Zugleich wird aber auch noch ein anderer Vorteil erzielt: Dadurch, dass das Zylindergehäuse 8 mit dem Aufnahmegehäuse 2 an der Betätigungsseite derart kurz sein kann, ist es möglich, die Stange 4 die Öffnungen 8a bzw. die Klemmöffnungen 9a mittig bezüglich der Länge des Zylindergehäuses 8 bzw. der Linearbewegungseinheit 1 durchsetzen zu lassen, was für die Montage der Linearbewegungseinheit 1 ein Vorteil sein kann, weil dann die Winkellage um die Stange 4 herum unkritisch ist.

Die Rolle 21 ist zwischen den beiden freien Enden der hebelartigen Klemmglieder 9 gehalten. Da diese um die Schwenkachse 15 schwenkbar sind, bedeutet eine solche Schwenkung ein Öffnen bzw. Auseinandergehen der beiden Klemmglieder 9, so dass die Rolle 21 tiefer nach unten eindringen würde. Dies kann aber noch in vorteilhafter Weise unterstützt werden, indem die freien Enden der Klemmglieder mit schräg bzw. unter einem Winkel α zur Achse 8b der Hülse bzw. zur Bewegungsrichtung des Kolbens 20 ausgerichteten Abrollflächen 22 versehen sind. Zwischen diese Abrollflächen 22 taucht der Rotationskörper 21 vorzugsweise derart ein, dass die Eindringtiefe T (Fig. 3) grösser ist als der um ein Mass t herausragende Teil des Rotationskörpers 21. Dadurch wird der Rotationskörper 21 käfigartig gehalten.

In der Praxis hat sich gezeigt, dass die Kräfteverhältnisse tatsächlich so sind, dass unter allen Umständen ein Abrollen stattfindet. Bewegt sich beispielsweise die Stange 4 relativ zur Feststellvorrichtung 1 nach links (Fig. 3), während der Kolben 20 mit der Druckfläche 5 drucklos ist, so liegt die Rolle 21 nicht mehr fest an der Druckfläche 5 an. Gleichzeitig aber werden die beiden Klemmglieder 9 durch die Anlage der Teilflächen 9a" von der Stange 4 mitgenommen, wobei sie vorzugsweise eine Drehung um die Schwenkachse 15 ausführen. Ohne die Schwenkachse 15 würden die beiden Klemmglieder zwar auch mitgenommen, doch wäre die Synchronität und er ordnungsgemässe Bewegungsablauf nicht mehr gesichert. Je mehr aber die beiden Klemmglieder 9 nach links schwenken, desto fester wird die flächige Anlage an der Oberfläche der Stange 4 und um so stärker der Druck der Klemmglieder 9 auf die Stange. Dabei wird das linke Klemmglied 9 von der Rolle 21 eher weggezogen, die dann an der Abrollfläche 22 des rechten Klemmgliedes 9 ungehindert abrollen kann. Dasselbe geschieht bei einer Bewegung, wie sie in Fig. 4 gezeigt ist, im umgekehrten Sinn.

## Patentansprüche

1. Feststellvorrichtung für eine Linearbewegungseinheit, die relativ zu mindestens einer Stange (4) verfahrbar gelagert ist, mit zwei von der Stange (4) im Bereich von Klemmöffnungen (9a) durchsetzten Klemmgliedern (9), die je zwischen einer ersten und einer zweiten Stellung um eine Schwenkachse (15) schwenkbar sind, wobei sie in der ersten Stellung über die Innenfläche einer die Stange (4) aufnehmenden Klemmöffnung (9a) reibungsschlüssig mit der Stange (4) in Eingriff stehen und in der zweiten Stellung die Klemmglieder (9) gegenüber der Stange (4), oder umgekehrt, lose verschieblich sind, wobei die Umschaltung von einer Stellung auf die andere mit Hilfe eines Betätigungsantriebes (20, 21) erfolgt, der einen Antriebsteil (20) und einen von diesem gesonderten und gegenüber einer ihm zugekehrten Druckfläche (5) des Antriebsteiles (20) quer zur Umschaltbewegung bewegbaren, den Klemmgliedern (9) gegenüberliegenden keilartigen Betätigungsteil (21) aufweist, der wenigstens in einer der Stellungen zwischen die Klemmglieder (9) eingreift, **dadurch gekennzeichnet, dass** der keilartige Betätigungsteil als mindestens ein Rotationskörper (21), vorzugsweise aus Metall, insbesondere aus Stahl, ausgebildet ist, der an der Druckfläche (5) des Antriebsteiles (20) abrollbar ist.

2. Feststellvorrichtung nach Anspruch 1, **dadurch gekennzeichnet, dass** der Rotationskörper (21) eine, vorzugsweise zylindrische, Rolle ist.

3. Feststellvorrichtung nach Anspruch 1 oder 2, **dadurch gekennzeichnet, dass** zum Führen der Schwenkbewegungen im Bereiche der Schwenkachse (15) erste Führungsflächen (13) der Klemmglieder (9) mit zweiten Führungsflächen (12) einer die Klemmglieder (9) zumindest teilweise aufnehmenden Halterung zusammenwirken, wobei für die Schwenkbewegung jedes Klemmgliedes (9) mindestens eine in einer Schnittebene quer zur Schwenkachse gekrümmte Führungsfläche (12,13) so vorgesehen ist, dass die einander zugeordneten ersten und zweiten Führungsflächen (13,12) im wesentlichen spielfreie Schwenkbewegungen der Klemmglieder (9) führen.

4. Feststellvorrichtung nach einem der vorhergehenden Ansprüche, **dadurch gekennzeichnet, dass** die Innenfläche (9a') der Klemmöffnung (9a) mindestens eines Klemmgliedes (9) einen im wesentlichen konvexen Querschnitt aufweist.

5. Feststellvorrichtung nach einem der vorhergehenden Ansprüche, **dadurch gekennzeichnet, dass** mindestens eines der Klemmglieder (9) eine in mindestens einer seiner Stellungen mit dem Rotationskörper (21) des Betätigungsteiles (20, 21) in Eingriff stehende, bezüglich der Richtung der Umschaltbewegung unter einem Winkel (α) angeordnete Abrollfläche (22) und/oder eine Abrollfläche (23a, 23b) im Bereiche der Schwenkachse (15) aufweist.

6. Feststellvorrichtung nach einem der vorhergehenden Ansprüche, **dadurch gekennzeichnet, dass** der Rotationskörper (21) in jeder Stellung tiefer zwischen die Klemmglieder (9) eindringt, als über diese hinaus gegen den Antriebsteil vorragt
und/oder
dass die Anordnung des Kolbens (20) relativ zu den Stimenden (9c) der Klemmgliedern (9) derart dimensioniert und gewählt ist, dass diese Stirnenden (9c) jeweils einen Endanschlag für den unter Druck gesetzten Kolben (20) bilden.

7. Feststellvorrichtung insbesondere nach einem der vorhergehenden Ansprüche, **dadurch gekennzeichnet, dass** die Druckfläche (5) des Antriebsteiles (20) an einem fluidisch, insbesondere pneumatisch, betätigbaren Kolben ausgebildet ist, welcher vorzugsweise mindestens zwei Führungsflächen, insbesondere mindestens eine radial innere (19') und wenigstens eine radial äussere (2) Führungsfläche, aufweist, wobei zweckmässig die innere Führungsfläche (19') von einer zentrisch, mit einem Vorsprung, gegebenenfalls einem rohrförmigen Vorsprung (2') für die Fluidzuführung, zusammenwirkenden Bohrung (19) gebildet ist.

8. Feststellvorrichtung nach einem der vorhergehenden Ansprüche, **dadurch gekennzeichnet, dass** die Druckfläche (5) des Antriebsteiles (20) als quer zur Richtung der Umschaltbewegung verlaufende ebene Fläche ausgebildet ist.

9. Feststellvorrichtung nach einem der vorhergehenden Ansprüche, **dadurch gekennzeichnet, dass** die Klemmglieder (9) durch eine Rückholeinrichtung - wie ein elastisches, ihre freien Enden umspannendes Band, ein Ring (18) od.dgl. - gegeneinander und somit gegen eine ihrer Stellungen, insbesondere die Eingriffsstellung, vorgespannt sind, bzw. bevorzugt durch Druck des Betätigungsantriebes (20, 21) aus der ersten in die zweite Stellung gelangen.

10. Feststellvorrichtung nach einem der vorhergehenden Ansprüche, **dadurch gekennzeichnet, dass** Klemmöffnungen (9a) bezüglich der Längserstreckung der Linearbewegungseinheit (1) wenigstens annähernd mittig angeordnet sind.
